# EUROPÄISCHE PATENTSCHRIFT

(11) **EP 3 123 689 B1**
(45) Veröffentlichungstag und Bekanntmachung des Hinweises auf die Patenterteilung: **11.05.2022**
(21) Anmeldenummer: 15713430.5
(22) Anmeldetag: 25.03.2015
(51) Int. Cl.: H04L 29/06, H04L 9/08, H04L 9/32, H04W 12/06, H04W 12/10, H04W 4/40, H04W 4/70

(54) **VERFAHREN UND SYSTEM ZUR VERBESSERUNG DER DATENSICHERHEIT BEI EINEM KOMMUNIKATIONSVORGANG**
METHOD AND SYSTEM FOR IMPROVING THE DATA SECURITY DURING A COMMUNICATION PROCESS
PROCÉDÉ ET SYSTÈME D'AMÉLIORATION DE LA SÉCURITÉ DES DONNÉES DANS UN PROCESSUS DE COMMUNICATION

(30) Priorität: 26.03.2014 DE 102014205593
(43) Veröffentlichungstag der Anmeldung: 01.02.2017
(73) Patentinhaber: Continental Teves AG & Co. OHG, 60488 Frankfurt am Main (DE)
(72) Erfinder: ANTONI, Henrik, 63579 Freigericht (DE); MARTIN, Torsten, 61449 Steinbach/Taunus (DE); RÖMMELE, Stefan, 61476 Kronberg (DE); MENZEL, Marc, 35096 Weimar (Lahn) (DE)
(74) Vertreter: Continental Corporation
(86) Internationale Anmeldenummer: PCT/EP2015/056413
(87) Internationale Veröffentlichungsnummer: WO 2015/144764

(56) Entgegenhaltungen:
- DE-A1-102007 058 975
- US-A1- 2014 019 764
- MARKO WOLF ET AL: "Design, Implementation, and Evaluation of a Vehicular Hardware Security Module", 30. November 2011 (2011-11-30), INFORMATION SECURITY AND CRYPTOLOGY - ICISC 2011, SPRINGER BERLIN HEIDELBERG, BERLIN, HEIDELBERG, PAGE(S) 302 - 318, XP047011554, ISBN: 978-3-642-31911-2 Zusammenfassung; Abbildungen 1, 2; Tabellen 1, 4 * Abschnitte 3-5 *
- OLIVER SANDER ET AL: "Design of a Vehicle-to-Vehicle communication system on reconfigurable hardware", FIELD-PROGRAMMABLE TECHNOLOGY, 2009. FPT 2009. INTERNATIONAL CONFERENCE ON, IEEE, PISCATAWAY, NJ, USA, 9. Dezember 2009 (2009-12-09), Seiten 14-21, XP031599367, ISBN: 978-1-4244-4375-8

## Beschreibung

Die Erfindung betrifft ein Verfahren und ein System zur Verbesserung der Datensicherheit bei einem Kommunikationsvorgang einer Fahrzeug-zu-X Kommunikation.

Die sog. Fahrzeug-zu-X-Kommunikation (Vehicle-2-X oder V2X) ist Stand der Technik und befindet sich gegenwärtig in einem Standardisierungsprozess, unter anderem bei der ETSI. Die sog. Elliptic Curve Cryptography (ECC) ist ebenfalls im Stand der Technik bekannt. Weiterhin bekannt sind die sog. Elliptic Curve Digital Signature Algorithm (ECDSA), welche ein sog. Federal Information Processing Standard Verfahren (FIPS) zur Erzeugung und Verifizierung digitaler Unterschriften darstellen. Die Nutzung von ECDSA zur Signierung und Verifikation von Fahrzeug-zu-X-Nachrichten ist von IEEE, ETSI und dem Car2Car Communication Consortium standardisiert worden. Die Nutzung von sog. Longterm Certificates (LTC) und sog. ECU-Keys zur Authentifizierung von Fahrzeug-zu-X-Kommunikationssystemen bei einer Publik-Key-Infrastructure (PKI) ist ebenfalls von IEEE, ETSI und dem Car2Car Communication Consortium standardisiert worden.

Die US 2014 / 019764 A1 beschreibt ein Verfahren zum Signieren und Verifizieren von Daten unter Verwendung mehrerer Hash-Algorithmen und -Versionen in PKCS, einschließlich dem Abrufen einer Nachricht zum Signieren in einer Ursprungs-Berechnungsvorrichtung, um eine Signatur für die Nachricht zu erhalten, und dem Identifizieren mehrerer Hash-Algorithmen, die von der Signatur unterstützt werden sollen. Für jeden der mehrfachen Hash-Algorithmen, die identifiziert werden, um von der Signatur unterstützt zu werden, wird ein Hashing der Nachricht durchgeführt, um entsprechend den mehrfachen Hash-Algorithmen mehrere Hashes der Nachricht zu erhalten.

In Marko Wolf et al: "Design, Implementation, and Evaluation of a Vehicular Hardware Security Module" ist eine schematische Abbildung einer fahrzeugspezifischen Hardware-Sicherheitsmodularchitektur, welche einen Prozessor (Application Core) und ein Hardware-Sicherheitsmodul (HSM) aufweist, gezeigt, wobei das HSM durch eine interne Kommunikationsverbindung mit dem Prozessor verbunden ist.

Es ist die der Erfindung zugrundeliegende Aufgabe, ein effizientes Konzept zur Verbesserung der Datensicherheit bei einem Kommunikationsvorgang im Bereich der Fahrzeug-zu-X-Kommunikation anzugeben.

Die Aufgabe wird durch die in den unabhängigen Ansprüchen beschriebenen Maßnahmen gelöst.

Der Begriff Datensicherheit beschreibt im Sinne der Erfindung die Sicherheit gegen unbefugten Zugriff auf die Daten bzw. Datenmissbrauch. Die Datensicherheit hängt somit maßgeblich von einer Verschlüsselung bzw. Fälschungssicherheit der Daten ab. Da die oben genannten Verfahren geheime Schlüsseldaten verwenden ist auch eine geheime Speicherung und Verwendung der Schlüssel Teil der Datensicherheit. Die Begriffe Datensicherheit und Security werden im Sinne der Erfindung synonym verwendet.

Gemäß einem Aspekt der Erfindung wird die Aufgabe durch ein Verfahren zur Verbesserung der Datensicherheit bei einem Kommunikationsvorgang einer Fahrzeug-zu-X Kommunikation eines Fahrzeugs, wobei zu versendende Fahrzeug-zu-X Botschaften vor dem Versenden signiert werden und empfangene Fahrzeug-zu-X Botschaften beim Empfangen verifiziert werden, gelöst, bei dem die Signierung mittels eines Prozessors erfolgen und die Verifikation mittels eines Hardware Security Moduls erfolgen.

Die Signierung kann eine Authentifizierung umfassen oder sein. Ferner kann die Verifikation eine Authentizitätsprüfung umfassen oder sein.

Gemäß einem weiteren Aspekt der Erfindung wird die Aufgabe durch ein Verfahren zur Verbesserung der Datensicherheit bei einem Kommunikationsvorgang einer Fahrzeug-zu-X Kommunikation eines Fahrzeugs, wobei zu versendende Fahrzeug-zu-X Botschaften vor dem Versenden verschlüsselt und/oder authentifiziert werden und empfangene Fahrzeug-zu-X Botschaften beim Empfangen entschlüsselt werden und/oder deren Authentizität geprüft wird, gelöst, bei dem die Verschlüsselung und/oder die Authentizität mittels eines Prozessors erfolgen und die Entschlüsselung und/oder die Authentizitätsprüfung mittels eines Hardware Security Moduls erfolgen, wobei der der Prozessor und das Hardware Security Modul über ein gemeinsames Geheimnis derart gekoppelt sind, dass zumindest das Hardware Security Modul mit keinem anderen Prozessor koppelbar ist, sodass die Kommunikation durch den Prozessor oder das Hardware Security Modul verweigert würde.

Das Hardware Security Modul ist vorzugsweise als ein eigener integrierter Schaltkreis unabhängig von dem Prozessor ausgebildet. Vorzugsweise ist das Hardware Security Modul nur mit dem Prozessor gekoppelt.

Die Kommunikationsdaten sind Fahrzeug-zu-X-Botschaften. Das Verfahren wird daher zur Verbesserung der Datensicherheit beim Übertragen von Fahrzeug-zu-X-Botschaften verwendet. Die mittels des Verfahrens erreichte Effizienz beim Verschlüsseln und Authentifizieren kommt in einer Fahrzeugumgebung besonders vorteilhaft zur Geltung, weil durch die Bewegung des Ego-Fahrzeugs die Kommunikationsstruktur kurzlebiger ist als in einer statischen Umgebung.

In einer weiteren vorteilhaften Ausführungsform genügt das Hardware Security Modul einem Datensicherheitszertifizierungsstandard, insbesondere einem EAL4+ - Standard.

In einer weiteren vorteilhaften Ausführungsform genügt das Hardware Security Modul einem Datensicherheitszertifizierungsstandard, insbesondere einem Sicherheitsniveau EAL4+ nach Common Criteria - Standard.

In einer weiteren vorteilhaften Ausführungsform umfassen sowohl der Prozessor als auch das Hardware Security Modul jeweils ein TRNG bzw. ein Schlüsselgenerierungsmodul.

In einer weiteren vorteilhaften Ausführungsform umfassen sowohl der Prozessor als auch das Hardware Security Modul jeweils einen nicht deterministischen Zufallszahlengenerator (TRNG), der für die Schlüsselgenerierung verwendet wird.

In einer weiteren vorteilhaften Ausführungsform sind der Prozessor und das Hardware Security Modul über ein gemeinsames Geheimnis derart gekoppelt, dass zumindest das Hardware Security Modul mit keinem anderen Prozessor koppelbar ist.

In einer weiteren vorteilhaften Ausführungsform führt der Prozessor Software aus, welche einen secure Boot-Vorgang, insbesondere einen hardwareunterstützen secure Boot-Vorgang, ausführt.

In einer weiteren vorteilhaften Ausführungsform führt der Prozessor nur Software aus, welche in einem secure Boot-Vorgang, insbesondere in einem hardwareunterstützen secure Boot-Vorgang, geladen wird.

In einer weiteren vorteilhaften Ausführungsform führt der Prozessor Software aus, welche Schnittstellen, insbesondere Debugging-Schnittstellen, erst nach einer erfolgreichen Authentifizierung der Kommunikationspartner öffnet.

In einer weiteren vorteilhaften Ausführungsform führt der Prozessor Software aus, welche Resourcenschutzverfahren, insbesondere für RAM, ROM und CPU load, ausführt.

In einer weiteren vorteilhaften Ausführungsform ist die Software ein Betriebssystem.

In einer weiteren vorteilhaften Ausführungsform führt der Prozessor Basis-Software aus, welche Resourcenschutzverfahren, insbesondere für RAM, ROM und CPU load, ausführt.

In einer weiteren vorteilhaften Ausführungsform ist die Basis-Software ein Betriebssystem.

In einer weiteren vorteilhaften Ausführungsform umfasst der Prozessor ein spezielles secure RAM, welches ausschließlich von einem dem Prozessor zugeordneten Security Modul nutzbar ist.

In einer weiteren vorteilhaften Ausführungsform erfolgt die Verschlüsselung mittels eines AES-Moduls des Prozessors.

In einer weiteren vorteilhaften Ausführungsform werden in einem nichtflüchtigen Speicher des Prozessors verschlüsselte Daten, insbesondere AES256 verschlüsselte Daten, abgelegt.

In einer weiteren vorteilhaften Ausführungsform ist das AES-Modul mit einem DMA verbunden.

In einer weiteren vorteilhaften Ausführungsform werden Pseudonyme zur Authentifizierung der Kommunikationsdaten von dem dem Prozessor zugeordneten Security Modul erzeugt.

In einer weiteren vorteilhaften Ausführungsform werden die für die Pseudonyme notwendigen Schlüsselpaare, insbesondere public und private keys, zur Authentifizierung der Kommunikationsdaten von dem dem Prozessor zugeordneten Security Modul erzeugt.

In einer weiteren vorteilhaften Ausführungsform ist ein Schlüssel des AES-Moduls in securityfuses des Prozessors abgelegt.

In einer weiteren vorteilhaften Ausführungsform sind die securityfuses ein gegen äußere Datenzugriffe besonders geschützter Speicherbereich des Prozessors.

In einer weiteren vorteilhaften Ausführungsform werden die Pseudonyme verschlüsselt vom Prozessor gespeichert.

In einer weiteren vorteilhaften Ausführungsform werden die privaten Pseudonyme oder Schlüssel verschlüsselt vom Prozessor in einem nichtflüchtigen Speicher, insbesondere in einem Flash-Speicher, gespeichert.

Gemäß einem weiteren Aspekt der Erfindung wird die Aufgabe durch ein System zur Verbesserung der Datensicherheit bei einem Kommunikationsvorgang einer Fahrzeug-zu-X Kommunikation eines Fahrzeugs, umfassend zumindest einen Prozessor und ein Hardware Security Modul, gelöst, bei dem das System das Verfahren ausführt.

Gemäß einem weiteren Aspekt der Erfindung wird die Aufgabe durch ein System zur Verbesserung der Datensicherheit bei einem Kommunikationsvorgang, umfassend zumindest einen Prozessor und ein Hardware Security Modul, wobei die Kommunikationsdaten vor einem Versenden authentifiziert werden und bei einem Empfangen deren Authentizität geprüft wird, gelöst, bei dem die Authentifizierung mittels des Prozessors erfolgt und die Authentizitätsprüfung mittels des vorzugsweise separaten Hardware Security Moduls erfolgt; bei dem die Kommunikationsdaten Fahrzeug-zu-X-Botschaften sind; und bei dem der Prozessor und das Hardware Security Modul über ein gemeinsames Geheimnis derart gekoppelt sind, dass zumindest das Hardware Security Modul mit keinem anderen Prozessor koppelbar ist. Dadurch wird der Vorteil erreicht, dass eine Rechenlast des Prozessors bei der Authentifizierung von empfangenen Kommunikationsdaten reduziert werden kann.

In einer vorteilhaften Ausführungsform führt der Prozessor nur Software aus, welche einen abgesicherten bzw. secure Boot-Vorgang, insbesondere einen hardwareunterstützen secure Boot-Vorgang, ausführt. Dadurch wird der Vorteil erreicht, dass ein signierter, d.h. vertrauenswürdiger, Bootloader zum Starten eines Betriebssystems verwendet werden kann.

In einer weiteren vorteilhaften Ausführungsform führt der Prozessor Software aus, welche Schnittstellen, insbesondere Debugging-Schnittstellen, erst nach einer erfolgreichen Authentifizierung der Kommunikationspartner öffnet. Dadurch wird der Vorteil erreicht, dass ein effizienter Zugriffsschutz für die Schnittstellen bereitgestellt werden kann.

In einer weiteren vorteilhaften Ausführungsform erfolgt die Verschlüsselung mittels eines AES-Moduls des Prozessors. Dadurch wird der Vorteil erreicht, dass die Kommunikationsdaten effizient verschlüsselt werden können.

In einer weiteren vorteilhaften Ausführungsform ist ein Schlüssel des AES-Moduls in securityfuses des Prozessors abgelegt; und sind die securityfuses ein gegen äußere Datenzugriffe besonders geschützter Speicherbereich des Prozessors. Dadurch wird der Vorteil erreicht, dass ein effizienter Zugriffsschutz für den Schlüssel des AES-Moduls bereitgestellt werden kann.

Ein beispielhaftes erfindungsgemäßes System besteht aus einer leistungsfähigen modernen Host CPU (z.B. ARM Cortex A) mit integrierten Security Funktionen und einem einfachen externen HSM. Das HSM kann z.B. EAL4+ zertifiziert werden, die Host CPU aufgrund Ihrer Komplexität jedoch üblicherweise nicht.

Der Begriff Hardware-Sicherheitsmodul (HSM) oder englisch Hardware Security Module bezeichnet im Sinne der Erfindung ein (internes oder externes) Peripheriegerät für die effiziente und sichere Ausführung kryptographischer Operationen oder Applikationen. Dies ermöglicht zum Beispiel, die Vertrauenswürdigkeit und die Integrität von Daten und den damit verbundenen Informationen in sicherheitskritischen IT-Systemen sicherzustellen. Um die notwendige Datensicherheit zu gewährleisten, kann es erforderlich sein, die zum Einsatz kommenden kryptographischen Schlüssel sowohl softwaretechnisch als auch gegen physikalische Angriffe oder Seitenkanalangriffe zu schützen.

Sowohl in der CPU als auch im HSM ist bevorzugt ein sog. TRNG, wie ein True Random Number Generator, eingebaut, der für die Schlüsselgenerierung genutzt werden kann und genutzt wird.

Ein TRNG ist dabei ein Schlüsselgenerierungsmodul, wobei ein Schlüssel ein digitale Datensequenz ist, die es erlaubt, einen Datensatz zu entschlüsseln bzw. dessen Authentizität zu überprüfen. Sofern der Absender des Datensatzes und der Empfänger des Datensatzes über den gleichen Schlüssel verfügen, kann der Empfänger somit den Datensatz entschlüsseln bzw. dessen Authentizität überprüfen.

Das HSM ist vorteilhafterweise über ein gemeinsames Geheimnis mit der CPU so verriegelt, dass es nur mit genau dieser CPU zusammenarbeitet. Das gemeinsame Geheimnis ist dabei eine besondere Datensequenz und eine Art von fest implementiertem Schlüssel, dessen Vorhandensein vor einer Übertragung der eigentlichen Daten bei der Gegenstelle geprüft wird, beispielsgemäß also bei der CPU und beim HSM. Sofern die CPU oder das HSM das gemeinsame Geheimnis nicht aufweisen, verweigert die Gegenstelle die Kommunikation.

Auf der CPU läuft bevorzugt ein Betriebssystem (Operating System, OS), das alle genannten Mechanismen bzw. Funktionen unterstützt, sodass ein beispielhaftes erfindungsgemäßes System nach CC zertifiziert werden kann. Die hierfür benötigten Mechanismen bzw. Funktionen sind z.B. secure Boot mit Hardware-Unterstützung, Öffnung der Debugging Schnittstellen erst nach Authentifizierung der Kommunikationspartner, Ressourcenschutz für RAM, ROM und CPU load. Weitere geeignete und dem Fachmann bekannte Mechanismen bzw. Funktionen können ebenfalls vorgesehen sein.

Der CPU ist bevorzugt ein spezielles secure RAM zugeordnet, das nur durch das zugehörige Security Modul genutzt werden kann.

Im nichtflüchtigen Speicher der CPU werden Daten bevorzugt verschlüsselt nach AES256 abgelegt. Die Verschlüsselung erfolgt dabei z.B. automatisch durch die Nutzung eines sog. Advanced Encryption Standard-Moduls (AES), das in den Direct Memory Access-Transfer (DMA) eingeschaltet wird.

Der AES-Schlüssel ist bevorzugt unzugänglich in sog. Securityfuses abgelegt.

Das HSM-Modul ist bevorzugt gegen sog. Seitenkanalattacken (side channel attacks) gesichert.

Das HSM enthält bevorzugt zusätzlich einen ECC-Beschleuniger, der in einer ersten Ausbaustufe besonders bevorzugt derart ausgelegt ist, dass er etwa 20 Verifikationen bzw. Signierungen pro Sekunde bewältigen kann. Gemäß einer zweiten Ausbaustufe ist der ECC-Beschleuniger besonders bevorzugt derart ausgelegt, dass er bis zu 400 Verifikationen bzw. Signierungen pro Sekunde bewältigen kann.

Gemäß einer Ausführungsform kann eine Implementierung von ECC und ECDSA in Hardware oder Software erfolgen. Gemäß einer weiteren Ausführungsform können Hardware Security Module (HSM) zur sicheren, d.h. vor unbefugtem Zugriff sicheren, Speicherung und Nutzung von kryptografischen Materialien (z.B. sog. Schlüsseln bzw. sog. private keys) genutzt werden.

Weitere bevorzugte Ausführungsformen ergeben sich aus den Unteransprüchen und der nachfolgenden Beschreibung eines Ausführungsbeispiels an Hand von Figuren.

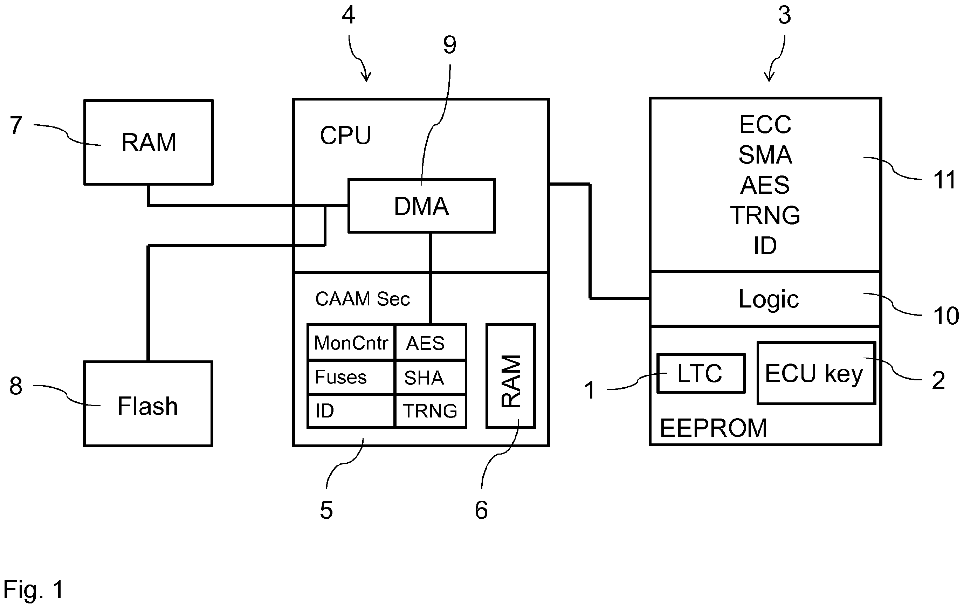

Es zeigt
Fig. 1 eine beispielhafte Nutzung einer erfindungsgemäßen Security Infrastruktur bzw. eines möglichen erfindungsgemäßen Systems in Form von Funktionsblöcken und Hardwareblöcken.

Fig. 1 zeigt eine beispielhafte Nutzung einer erfindungsgemäßen Security Infrastruktur bzw. eines möglichen erfindungsgemäßen Systems in Form von Funktionsblöcken und Hardwareblöcken. Das System umfasst einen Prozessor 4, welcher durch eine CPU gebildet ist, und ein davon unabhängiges Hardware Security Modul 3.

Das System zur Verbesserung der Datensicherheit bei einem Kommunikationsvorgang kann den Prozessor 4 und das Hardware Security Modul 3 umfassen, wobei die Kommunikationsdaten vor einem Versenden authentifiziert werden und bei einem Empfangen deren Authentizität geprüft wird, wobei die Authentifizierung mittels des Prozessors 4 erfolgt und die Authentizitätsprüfung mittels des Hardware Security Moduls 3 erfolgt; wobei die Kommunikationsdaten Fahrzeug-zu-X-Botschaften sind; und wobei der Prozessor 4 und das Hardware Security Modul 3 über ein gemeinsames Geheimnis derart gekoppelt sind, dass zumindest das Hardware Security Modul 3 mit keinem anderen Prozessor koppelbar ist.

Ein privater Schlüssel für eine ECU, der sog. ECU-Key 2, und ein Langzeitzertifikat, der sog. LTC 1 (Longterm Certificate), werden beispielhaft in HSM 3 erzeugt, gespeichert und auch nur dort genutzt, d.h. dass die entsprechenden private Keys (ECU-Key 2 und LTC 1) HSM 3 nie verlassen und dass HSM 3 selbst durch Entfernen von der zugehörigen Hardwareplatine, z.B. mittel Löten, nicht missbraucht werden kann, da es an CPU 4 gekoppelt ist. Pseudonyme werden in Security Modul 5 von CPU 4 erzeugt und verschlüsselt gespeichert. Auch werden alle Message Signierungen bzw. Botschaftssignierungen in CPU 4 ausgeführt, da dort eine Signierung nur ca. 2 ms dauert, was für die notwendigen End-to-End Latenzzeiten von < 100ms sehr viel günstiger ist als die Nutzung von HSM 3, das für diese Operation ca. 50 ms braucht. Die Nutzung von nichtflüchtigem Speicher 6 von CPU 4 für die Befehlszähler-Speicherung, auch Programmzähler-Speicherung oder auch Programmschrittzähler-Speicherung (*program counter, PC*) hat den Vorteil das hierdurch PC-Zahlen von 3000, oder auch mehr problemlos und preiswert möglich sind. Alternativ kann der nichtflüchtige Speicher 6 von CPU 4 für security relevante Daten wie Pseudonyme verwendet werden, was den Vorteil hat das hierdurch mehrere tausend Pseudonyme oder andere Security Zertifikate problemlos und preiswert gespeichert werden können.

Die Verfikation von eingehenden Messages bzw. Botschaften wird für alle weiterzuleitenden Messages bzw. Botschaften (sog. Multihop) durchgeführt (max. 10/s). Zusätzlich wird eine sog.
"on-demand"- Verfikation durchgeführt (max 5/s) oder wird eine Verfikation aller eingehenden Botschaften durchgeführt, falls genügend Rechenleistung hierfür verfügbar ist.

Die Nachrichten werden in CPU 4 gehashed und der Hash und der public key des anhängenden PC an HSM 3 übertragen, wo die ECC Operation durchgeführt wird. Hierdurch wird eine signifikante Entlastung von CPU 4 erreicht, wodurch hier beispielsgemäß auf eine Multicore CPU verzichtet werden kann. Die Auswertung der ECC Operation wird in CPU 4 durchgeführt.

Gemäß einer Ausführungsform werden die zu verifizierenden Nachrichten in CPU 4 mit einer Secure Hash Funktion, insbesondere mit SHA256 für ECDSA256, gehashed und der Hash und der public key des anhängenden Pseudonyms (PC) an HSM 3 übertragen, wo die ECC Operation durchgeführt wird. Hierdurch wird eine signifikante Entlastung von CPU 4 erreicht, wodurch hier beispielsgemäß auf eine Multicore CPU verzichtet werden kann. Die Auswertung der ECC Operation wird in CPU 4 durchgeführt.

Bei CPU 4 handelt es sich beispielsgemäß um einen iMX6solo-Prozessor der Firma Freescale.

Für HSM 3 wird beispielsgemäß ein ATECC108-Chip der Firma Atmel verwendet. Als Betriebssystem auf CPU 4 wird beispielsgemäß PikeOS der Firma Sysgo verwendet.

Weiterhin umfasst das beispielhaft dargestellte System RAM 7, Flash-Speicher 8, DMA 9, Logik-Modul 10, kombiniertes ECC-, SMA-, AES-, TRNG-, und ID-Modul 11.

### Bezugszeichenliste

- 1: LTC
- 2: ECC-Key
- 3: Hardware Security Module, HSM
- 4: Prozessor, CPU
- 5: Security Modul
- 6: Speicher
- 7: RAM
- 8: Flash-Speicher
- 9: DMA
- 10: Logik-Modul
- 11: Kombiniertes ECC-, SMA-, AES-, TRNG-, und ID-Modul

## Patentansprüche

1. Verfahren zur Verbesserung der Datensicherheit bei einem Kommunikationsvorgang einer Fahrzeug-zu-X Kommunikation eines Fahrzeugs,
wobei zu versendende Fahrzeug-zu-X Botschaften vor dem Versenden verschlüsselt und/oder authentifiziert werden und
empfangene Fahrzeug-zu-X Botschaften beim Empfangen entschlüsselt werden und/oder deren Authentizität geprüft wird, wobei die Verschlüsselung und/oder die Authentifizierung mittels eines Prozessors (4) erfolgen und die Entschlüsselung und/oder die
Authentizitätsprüfung mittels eines Hardware Security Moduls (3) erfolgen, wobei der Prozessor (4) und das Hardware Security Modul (3) über ein gemeinsames Geheimnis derart gekoppelt sind, dass zumindest das Hardware Security Modul (3) mit keinem anderen Prozessor (4) koppelbar ist, sodass die Kommunikation durch den Prozessor (4) oder das Hardware Security Modul (3) verweigert würde.

2. Verfahren nach Anspruch 1,
**dadurch gekennzeichnet,**
**dass** sowohl der Prozessor als auch das Hardware Security Modul jeweils ein TRNG bzw. ein Schlüsselgenerierungsmodul umfassen.

3. Verfahren nach mindestens einem der Ansprüche 1 bis 2, **dadurch gekennzeichnet,**
**dass** der Prozessor Software ausführt, welche einen secure Boot-Vorgang, insbesondere einen hardwareunterstützen secure Boot-Vorgang, ausführt.

4. Verfahren nach mindestens einem der Ansprüche 1 bis 3, **dadurch gekennzeichnet,**
**dass** der Prozessor Software ausführt, welche Schnittstellen erst nach einer erfolgreichen Authentifizierung der Kommunikationspartner öffnet.

5. Verfahren nach mindestens einem der Ansprüche 1 bis 4, **dadurch gekennzeichnet,**
**dass** der Prozessor ein spezielles secure RAM umfasst, welches ausschließlich von einem dem Prozessor zugeordneten Security Modul nutzbar ist.

6. Verfahren nach mindestens einem der Ansprüche 1 bis 5, **dadurch gekennzeichnet,**
**dass** die Verschlüsselung mittels eines AES-Moduls des Prozessors erfolgt.

7. Verfahren nach mindestens einem der Ansprüche 1 bis 6, **dadurch gekennzeichnet,**
**dass** ein Schlüssel des AES-Moduls in securityfuses des Prozessors abgelegt ist.

8. System zur Verbesserung der Datensicherheit bei einem Kommunikationsvorgang einer Fahrzeug-zu-X Kommunikation eines Fahrzeugs,
umfassend zumindest einen Prozessor (4) und ein Hardware Security Modul (3),
**dadurch gekennzeichnet,**
**dass** das System ein Verfahren nach mindestens einem der Ansprüche 1 bis 7 ausführt.

9. System nach Anspruch 8,
**dadurch gekennzeichnet,**
**dass** der Prozessor (4) nur Software ausführt, welche einen secure Boot-Vorgang, insbesondere einen hardwareunterstützen secure Boot-Vorgang, ausführt.

10. System nach Anspruch 8 oder 9,
**dadurch gekennzeichnet,**
**dass** der Prozessor (4) Software ausführt, welche Schnittstellen erst nach einer erfolgreichen Authentifizierung der Kommunikationspartner öffnet.

## Claims

1. Method for improving the data security in a communication process of vehicle-to-X communication of a vehicle,
wherein vehicle-to-X messages to be sent are encrypted and/or authenticated before sending and
received vehicle-to-X messages are decrypted and/or the authenticity thereof is checked when received,
wherein a processor (4) is used to perform the encryption and/or the authentication, and a hardware security module (3) is used to perform the decryption and/or the authenticity check, wherein the processor (4) and the hardware security module (3) are linked via a shared secret such that at least the hardware security module (3) cannot be linked to any other processor (4), with the result that communication would be denied by the processor (4) or the hardware security module (3).

2. Method according to Claim 1,
**characterized in that**
both the processor and the hardware security module each comprise a TRNG or a key generator module.

3. Method according to at least one of Claims 1 to 2, **characterized in that**
the processor executes software that performs a secure boot procedure, in particular a hardware-assisted secure boot procedure.

4. Method according to at least one of Claims 1 to 3, **characterized in that**
the processor executes software that opens interfaces only after successful authentication of the communication partners.

5. Method according to at least one of Claims 1 to 4, **characterized in that**
the processor comprises a special secure RAM, which can be used solely by a security module assigned to the processor.

6. Method according to at least one of Claims 1 to 5, **characterized in that**
an AES module of the processor is used to perform the encryption.

7. Method according to at least one of Claims 1 to 6, **characterized in that**
a key of the AES module is stored in security fuses of the processor.

8. System for improving the data security in a communication process of vehicle-to-X communication of a vehicle,
comprising at least a processor (4) and a hardware security module (3),
**characterized in that**
the system implements a method according to at least one of Claims 1 to 7.

9. System according to Claim 8,
**characterized in that**
the processor (4) executes only software that performs a secure boot procedure, in particular a hardware-assisted secure boot procedure.

10. System according to Claim 8 or 9,
**characterized in that**
the processor (4) executes software that opens interfaces only after successful authentication of the communication partners.

## Revendications

1. Procédé d'amélioration de la sécurité des données dans un processus de communication d'une communication de véhicule à autre objet connecté d'un véhicule,
dans lequel des messages de véhicule à autre objet connecté à envoyer sont cryptés et/ou authentifiés avant l'envoi, et des messages de véhicule à autre objet connecté reçus sont décryptés et/ou contrôlés quant à leur authenticité lors de la réception, le cryptage et/ou l'authentification étant effectués au moyen d'un processeur (4), et le décryptage et/ou le contrôle d'authenticité étant effectués au moyen d'un module de sécurité matérielle (3),
le processeur (4) et le module de sécurité matérielle (3) étant liés par un secret commun de telle sorte qu'au moins le module de sécurité matérielle (3) ne peut être lié à aucun autre processeur (4) de sorte que la communication serait refusée par le processeur (4) ou le module de sécurité matérielle (3).

2. Procédé selon la revendication 1, **caractérisé en ce qu'**à la fois le processeur et le module de sécurité matérielle comprennent respectivement un générateur de nombres réellement aléatoires (TRNG) ou un module de génération de clé.

3. Procédé selon au moins l'une des revendications 1 à 2, **caractérisé en ce que** le processeur exécute un logiciel qui exécute un processus de démarrage sécurisé, en particulier un processus de démarrage sécurisé assisté par le matériel.

4. Procédé selon au moins l'une des revendications 1 à 3, **caractérisé en ce que** le processeur exécute un logiciel qui n'ouvre des interfaces qu'après une authentification réussie des partenaires de communication.

5. Procédé selon au moins l'une des revendications 1 à 4, **caractérisé en ce que** le processeur comprend une RAM sécurisée spéciale qui est utilisable uniquement par un module de sécurité associé au processeur.

6. Procédé selon au moins l'une des revendications 1 à 5, **caractérisé en ce que** le cryptage est effectué au moyen d'un module AES du processeur.

7. Procédé selon au moins l'une des revendications 1 à 6, **caractérisé en ce qu'**une clé du module AES est stockée dans des fusibles de sécurité du processeur.

8. Système d'amélioration de la sécurité des données dans un processus de communication d'une communication de véhicule à autre objet connecté d'un véhicule, comprenant au moins un processeur (4) et un module de sécurité matérielle (3), **caractérisé en ce que** le système exécute un procédé selon au moins l'une des revendications 1 à 7.

9. Système selon la revendication 8, **caractérisé en ce que** le processeur (4) n'exécute qu'un logiciel qui exécute un processus de démarrage sécurisé, en particulier un processus de démarrage sécurisé assisté par le matériel.

10. Système selon la revendication 8 ou 9, **caractérisé en ce que** le processeur (4) exécute un logiciel qui n'ouvre des interfaces qu'après une authentification réussie des partenaires de communication.
